# EUROPÄISCHE PATENTSCHRIFT

(11) **EP 2 193 408 B1**
(45) Veröffentlichungstag und Bekanntmachung des Hinweises auf die Patenterteilung: **02.02.2011**
(21) Anmeldenummer: 08804424.3
(22) Anmeldetag: 18.09.2008
(51) Int. Cl.: G05B 19/042

(54) **INTEGRIERTES MIKROPROZESSORSYSTEM FÜR SICHERHEITSKRITISCHE REGELUNGEN**
INTEGRATED MICROPROCESSOR SYSTEM FOR SAFETY-CRITICAL CONTROL SYSTEMS
SYSTÈME MICROPROCESSEUR INTÉGRÉ POUR DES RÉGULATIONS CRITIQUES POUR LA SÉCURITÉ

(30) Priorität: 21.09.2007 DE 102007045398
(43) Veröffentlichungstag der Anmeldung: 09.06.2010
(73) Patentinhaber: Continental Teves AG & Co. oHG, 60488 Frankfurt (DE)
(72) Erfinder: KRANZ, Thomas, 61191 Rosbach (DE); GIERS, Bernhard, 65812 Bad Soden (DE)
(86) Internationale Anmeldenummer: PCT/EP2008/062489
(87) Internationale Veröffentlichungsnummer: WO 2009/040300

(56) Entgegenhaltungen:
- DE-A1- 3 923 432
- US-A1- 2003 018 860

## Beschreibung

Die Erfindung betrifft ein integriertes Mikroprozessorsystem für sicherheitskritische Regelungen, das zumindest ein Haupt- und ein Überwachungsprogramm abarbeitet sowie dessen Verwendung in Kraftfahrzeugen.

Es ist bekannt, als zentrale Kontrolleinheit für sicherheitskritische Regelungen zwei miteinander verbundene, vollständige Mikroprozessorsysteme zu verwenden, von denen ein Erstes ein Hauptprogramm und ein Zweites ein Überwachungsprogramm abarbeiten. Hierdurch wird zwar eine Trennung zwischen Haupt- und Überwachungsprogramm gewährleistet und eine unerwünschte gegenseitige Beeinflussung kann somit im Wesentlichen vermieden werden, allerdings ist die Verwendung zweier vollständiger Mikroprozessorsysteme, beispielsweise bezüglich der Chipfläche, des Anschlussaufwandes, der Verbindung der beiden Mikroprozessorsysteme untereinander, separater Betriebssysteme und der Energieversorgung, relativ aufwändig und kostspielig.

Druckschrift DE 195 29 434 A1 beschreibt ein Mikroprozessorsystem mit Kernredundanz für sicherheitskritische Regelungsapplikationen. Bei diesem bekannten Mikroprozessorsystem sind zwei synchron betriebene Prozessorkerne auf einem oder mehreren Chips vorgesehen, die die gleichen Eingangsinformationen erhalten und das gleiche Programm abarbeiten. Die beiden Prozessorkerne sind dabei über separate Bus-Systeme an die Festwert- (ROM) und an die Schreib-Lese-Speicher (RAM) sowie an Eingabe- und Ausgabeeinheiten angeschlossen. Die Bus-Systeme sind untereinander durch Treiberstufen bzw. Bypässe verbunden, die den beiden Prozessorkernen ein gemeinsames Lesen und Abarbeiten der zur Verfügung stehenden Daten, einschließlich der Prüfdaten und Befehle ermöglichen. Das System ermöglicht eine Einsparung von Speicherplatz. Nur einer der beiden Prozessorkerne ist (direkt) mit einem vollwertigen Festwert- und einem Schreib-Lese-Speicher verbunden, während die Speicherkapazität des zweiten Prozessorkerns auf Speicherplätze für Prüfdaten in Verbindung mit einem Prüfdatengenerator beschränkt ist. Zugriff zu allen Daten besteht über die Bypässe. Dadurch sind beide Prozessorkerne in der Lage, jeweils das vollständige Programm abzuarbeiten. Dieses Mikroprozessorsystem kann auch ein Haupt- und ein Überwachungsprogramm jeweils in den beiden Prozessorkernen abarbeiten. Dabei können allerdings möglicherweise unerwünschte, gegenseitige Beeinflussungen der beiden Programme auftreten, wodurch insbesondere die Zuverlässigkeit des Überwachungsprogramms für besonders sicherheitskritische Regelungen nicht hinreichend ist.

In Druckschrift WO 02/093287 A2 wird ein Mikroprozessorsystem vorgeschlagen, umfassend zwei Prozessorkerne, denen insbesondere jeweils ein Schreibe-Lese-Speicher und zwei Festwertspeicher zugeordnet sind, und einen Adress-Vergleicher der die Adressen eines Prozessorkerns mit festgelegten Adressbereichen vergleicht, welche einem Programm für sicherheitskritische Funktionen und einem Programm für Komfortfunktionen zugeordnet sind.

Aus der DE 39 23 432 A1 geht eine Einrichtung zur Erzeugung von Messsignalen mit einer Mehrzahl von redundant vorgesehenen Sensoren und einer Mehrzahl von ebenfalls redundant ausgelegten Rechnern hervor. Jeder Rechner bearbeitet die Signale der Sensoren in einem Hauptprogramm und in einem Überwachungsprogramm. Die berechneten Werte werden einer Fehlerlogik zugeführt. Unerlaubte Speicherzugriffe des Haupt- bzw. Überwachungsprogramms auf den Speicherbereich des Überwachungs- bzw. Hauptprogramms können nicht erkannt werden.

Die US 2003/0018860 A1 beschreibt ein Mehrprozessor-Digitalsystem, welches Peripheriegeräte umfasst, die mit einem gemeinsamen Speicher (Shared Memory) verbunden sind. Die Mikroprozessoren führen unabhängige Betriebssysteme aus. Jedem der Prozessoren sind bestimmte Adressbereiche des gemeinsamen Speichers zugeordnet. Für die Kontrolle der Speicherzugriffe auf den gemeinsamen Speicher dienen freie Adressbereiche, die in einer gemeinsam genutzten Systemschutzliste (SPM) festgelegt sind. Durch die SPM wird nur dann Zugriff auf einen Speicherbereich gewährt, wenn das den Zugriff anfordernde Element berechtigt ist, auf die ausgewählte Region zuzugreifen.

Die Aufgabe der vorliegenden Erfindung besteht darin, ein Mikroprozessorsystem vorzuschlagen, welches sowohl relativ hohen Sicherheits- und Zuverlässigkeitsanforderungen genügt und insbesondere zur Abarbeitung von mindestens zwei sicherheitskritischen Programmen geeignet ist, als dabei auch relativ kostengünstig ist.

Die Aufgabe wird erfindungsgemäß gelöst durch das integrierte Mikroprozessorsystem gemäß Anspruch 1.

Der Erfindung liegt der Gedanke zu Grunde, ein integriertes Mikroprozessorsystem, das sich also nach außen im Wesentlichen als ein gemeinsames System darstellt, vorzuschlagen, wobei dieses integrierte Mikroprozessorsystem wenigstens zwei Mikroprozessorsystemmodule aufweist, die jeweils zumindest einen Prozessorkern, einen Schreibe-Lese-Speicher und eine Speicherschutzeinheit umfassen. Dabei arbeitet jedes der Mikroprozessorsystemmodule zumindest ein Haupt- und ein Überwachungsprogramm ab, denen jeweils ein separater Adressbereich des jeweiligen Schreibe-Lese-Speichers durch die jeweilige Speicherschutzeinheit zugeordnet ist. Unerlaubte Speicherzugriffe eines der Programme auf den separaten Adressbereiche eines anderen Programms werden von der jeweilig zugeordneten Speicherschutzeinheit zumindest erkannt.

Das Hauptprogramm sowie das Überwachungsprogramm sind zweckmäßigerweise sicherheitskritische Programme bzw. umfassen sicherheitskritische Funktionen.

Das erfindungsgemäße integrierte Mikroprozessorsystem kann mit einem gemeinsamen Betriebssystem oder zwei im Wesentlichen identischen bzw. identisch ausgelegten und konfigurierten Betriebssystemen betrieben werden. Die Verwendung eines gemeinsamen Festwertspeichers ist im Vergleich zur Verwendung von mehreren Festwertspeichern günstiger.

Das integrierte Mikroprozessorsystem ist sowohl redundant ausgelegt, als auch zuverlässig bezüglich einer im Wesentlichen unabhängigen Abarbeitung des jeweiligen Überwachungsprogramms. Hierdurch kann es vermieden werden, dass der Ablauf eines der Überwachungsprogramme durch das jeweilige Hauptprogramm gestört bzw. unerwünscht beeinflusst wird.

Die jeweiligen Speicherschutzeinheiten gewährleisten vorzugsweise eine logische Unabhängigkeit und eine Unabhängigkeit zur Laufzeit des jeweiligen Haupt- und Überwachungsprogramms. Die Speicherschutzeinheiten sind zweckmäßigerweise dem entsprechend ausgebildet und konfiguriert.

Die erfindungsgemäße Ausbildung des integrierten Mikroprozessorsystems ermöglicht zweckmäßigerweise unter Erfüllung relativ hoher Sicherheitsanforderungen die Ausführung bzw. Abarbeitung eines Hauptprogramms, welches sich insbesondere aus Unterprogrammen verschiedener Versionen zusammensetzt und/oder aus Unterprogrammen, die zu unterschiedlichen Zeitpunkten und/oder nach unterschiedlichen Vorgaben, insbesondere hinsichtlich der Betriebssicherheit und hinsichtlich von Ausfallgrenzwerten, programmiert wurden, weil dem gegenüber zweckmäßigerweise zumindest ein im Wesentlichen logisch unabhängiges Überwachungsprogramm die Datenverarbeitung des jeweiligen Hauptprogramms überwacht, wobei dies besonders bevorzugt Laufzeit unabhängig durchgeführt wird.

Das integrierte Mikroprozessorsystem ist insbesondere zur Erfüllung des SIL-3-Standards (Safety Integrity Level) und der entsprechenden Anforderungen geeignet.

Das Überwachungsprogramm ist bevorzugt so ausgebildet, dass es die Ausgangsdaten des jeweilig zugeordneten Hauptprogramms in Abhängigkeit definierter Prüfalgorithmen prüft und bewertet und das Hauptprogramm insbesondere hinsichtlich der Ansteuerung externer Systeme überstimmt bzw. unerwünschte Ansteuerungen externer Systeme durch das Hauptprogramm unterbindet.

Das Hauptprogramm und/oder das Überwachungsprogramm umfassen zweckmäßigerweise mehrere Unterprogramme bzw. Unterprogrammmodule, welche insbesondere unterschiedlicher Version und/oder Herkunft sind, wobei diesen Unterprogrammen besonders bevorzugt unterschiedliche, separate Adressbereiche des jeweiligen Schreibe-Lese-Speichers durch die jeweilige Speicherschutzeinheit zugeordnet sind. Hierdurch können unerwünschte Interferenzen bzw. Beeinflussungen der unterschiedlichen Unterprogramme vermieden werden, wodurch die Sicherheit und Zuverlässigkeit des Mikroprozessorsystems erhöht wird.

Das Haupt- und das Überwachungsprogramm werden bevorzugt durch verschiedene Entwicklungsteams bzw. verschiedene Personen entwickelt und/oder programmiert.

Die Speicherschutzeinheit ist vorzugsweise als Hardwareeinheit ausgebildet. Unter einer Speicherschutzeinheit wird insbesondere eine Memory Protection Unit (MPU) verstanden. Die Speicherschutzeinheit gewährleistet insbesondere eine laufzeitunabhängige Datenverarbeitung des Haupt- und Überwachungsprogramms sowie möglicher Unterprogramme.

Das integrierte Mikroprozessorsystem umfasst bevorzugt ein erstes und ein zweites Mikroprozessorsystemmodul, welche im Wesentlichen symmetrisch ausgebildet sind, wodurch ein vollständig redundantes System zur Verfügung steht.

Der gemeinsame Festwertspeicher umfasst vorzugsweise so viel Speicherplatz, dass die gespeicherten Daten und zusätzliche Prüfdaten, welche insbesondere aus einer Codierung der Daten zur Fehlererkennung und/oder Fehlerkorrektur resultieren, in diesem Festwertspeicher abgespeichert werden können bzw. abgespeichert sind. Insbesondere weist der gemeinsame Festwertspeicher eine integrierte Decodereinheit auf, welche die codierten Daten decodiert und an der Schnittstelle des Festwertspeichers decodiert bereitstellt und Fehler erkennt und/oder korrigiert und erkannte und/oder korrigierte Fehler, welche beispielsweise durch externe Störsignale oder Materialveränderungen entstehen, oder eine Information über solch einen oder mehrere Fehler besonders bevorzugt zusätzlich an der Schnittstelle des Festwertspeichers bereitstellt, wodurch die beiden Mikroprozessorsystemmodule diese Informationen berücksichtigen und/oder verarbeiten können.

Das Mikroprozessorsystem ist zweckmäßigerweise insgesamt oder zu Teilen auf einem gemeinsamen Chip angeordnet. Insbesondere sind zumindest die Mikroprozessorsystemmodule auf einem gemeinsamen Chip angeordnet und besonders bevorzugt als ASIC ausgebildet. Dies ist relativ kostengünstig, insbesondere hinsichtlich großer Stückzahlen.

Alternativ oder ergänzend vorzugsweise sind einzelne Module oder Teile des Mikroprozessorsystems als Code, insbesondere als ein Bitcode, verwirklicht, welcher als Ansteuerung eines logischen Mehrzweckchips, wie einem FPGA (field-programmable gate array), verwendet wird bzw. auf diesem gespeichert wird. Vor allem bei relativ geringen Stückzahlen können so Kosten gegenüber der Verwendung von ASICs gespart werden.

Im Fall eines durch eine der Speicherschutzeinheiten erkannten, unerwünschten Speicherzugriffs wird bevorzugt eine Unterbrechungsroutine bzw. Interruptroutine oder eine Ausnahmebehandlung (Exception) gestartet und abgearbeitet, welche das Haupt- oder Unterprogramm abbricht oder unterbricht, das diesen unerlaubten Speicherzugriff durchführt, und dieses Haupt- oder Unterprogramm gegen einen nochmaligen Aufruf oder eine nochmalige Abarbeitung sperrt oder definierte Parameter dieses Programms verändert oder welche ein Abschalten des Mikroprozessorsystems veranlasst oder welche zumindest Teile des Mikroprozessorsystems in einen Notbetriebsmodus mit eingeschränkter Funktionalität bzw. in einen sicheren Zustand versetzt oder in solch einem sicheren Zustand belässt.

Alternativ vorzugsweise verhindert eine der Speicherschutzeinheiten im Fall eines erkannten, unerlaubten Speicherzugriffs, diesen Speicherzugriff. Es wird also insbesondere im Fall, dass solch ein unerlaubter Speicherzugriff in Form eines anstehenden, ausführbaren Befehls vor dessen Ausführung erkannt wird, die Abarbeitung dieses Befehls durch die jeweilige Speicherschutzeinheit verhindert.

Das Mikroprozessorsystem weist bevorzugt ein Sicherheitsmodul auf, das insbesondere als Hardwaremodul ausgebildet ist, welches von den Speicherschutzeinheiten angesteuert werden kann und wenigstens im Fall eines erkannten, unerlaubten Speicherzugriffs zumindest Teile des Mikroprozessorsystems abschalten und/oder in einen Notbetriebsmodus mit eingeschränkter Funktionalität bzw. in einen sicheren Betriebszustand versetzen kann. Das Sicherheitsmodul ist besonders bevorzugt elektrisch und thermisch robuster ausgelegt als der übrige Teil des integrierten Mikroprozessorsystems. Dies wird insbesondere mittels der Dimensionierung der elektronischen Bauelemente erreicht.

Das Sicherheitsmodul ist vorzugsweise auf einem anderen Chip angeordnet.

Das Mikroprozessorsystem weist zweckmäßigerweise ein Ein-/Ausgabemodul mit mehreren Kanälen auf, über welche die Hauptprogramme und die Überwachungsprogramme externe Systeme, insbesondere externe Leistungs-Treiberstufen, ansteuern, wobei die Überwachungsprogramme besonders bevorzugt einen vorrangigen Zugriff auf das Ein-/Ausgabemodul im Vergleich zu den Hauptprogrammen haben oder ein Zugriff auf definierte Kanäle des Ein-/Ausgabemoduls nur bei Ansteuerung durch ein Haupt- und ein Überwachungsprogramm erfolgen kann.

Das Sicherheitsmodul umfasst vorzugsweise eine Watchdog-Einheit und steuert das Ein-/Ausgabemodul an, wobei im Fall eines erkannten, unerlaubten Speicherzugriffs, ein oder mehrere Kanäle des Ein-/Ausgabemoduls durch das Sicherheitsmodul abgeschaltet und/oder in einen sicheren Zustand versetzt werden oder in einem sicheren Zustand belassen werden.

Die Speicherschutzeinheit jedes Mikroprozessorsystemmoduls ordnet zweckmäßigerweise dem jeweiligen Haupt- und Überwachungsprogramm einen zusätzlichen, gemeinsamen Adressbereich des Schreibe-Lese-Speichers zu. Mittels dieses Speicherbereichs kann ein definierter, begrenzter und damit relativ sicherer Datenaustausch zwischen Haupt- und Überwachungsprogramm durchgeführt werden. Insbesondere liest das Überwachungsprogramm die zur Durchführung dieses Programms notwendigen Daten des Hauptprogramms aus diesem Speicherbereich.

Das Mikroprozessorsystem weist bevorzugt für zwei Mikroprozessorsystemmodule zwei Prüfeinrichtungen zur Überwachung der Datenverarbeitung dieser beiden Mikroprozessorsystemmodule auf. Dabei sind diese Prüfeinrichtungen jeweils mit den Prozessorkernen und den Schreibe-Lese-Speichern verbunden, wobei deren Daten hinsichtlich fehlerhafter Unterschiede miteinander verglichen werden. Durch die Prüfeinrichtung können Datenverarbeitungsfehler erkannt werden und dadurch, dass zwei Prüfeinrichtungen vorhanden sind, kann ebenfalls die Funktionstüchtigkeit der beiden Prüfeinrichtungen geprüft werden und/oder der Ausfall einer der Prüfeinrichtungen kompensiert werden.

Die Erfindung bezieht sich auch auf die Verwendung des integrierten Mikroprozessorsystems in Kraftfahrzeugen, insbesondere in einem Kraftfahrzeugregelungssystem.

Die erfindungsgemäße integrierte Schaltungsanordnung ist zur Verwendung in den Bereichen Fahrzeugtechnik, bevorzugt Kraftfahrzeugtechnik, Automatisierungs- und Regelungstechnik vorgesehen. Insbesondere ist die integrierte Schaltungsanordnung für sicherheitskritische Applikationen, besonders bevorzugt mit Fail-Safe- und/oder Fail-Silent-Anforderungen, vorgesehen. Ganz besonders bevorzugt ist die integrierte Schaltungsanordnung für eine Verwendung im Kraftfahrzeugbereich für elektronische Brems- und Regelungssysteme und Airbagsteuerungen vorgesehen.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung
- Fig. 1: ein beispielhaftes integriertes Mikroprozessorsys- tem und
- Fig. 2: ein Ausführungsbeispiel zur Veranschaulichung der den verschiedenen Programmen zugeordneten Adress- bereichen eines der Schreibe-Lese-Speicher.

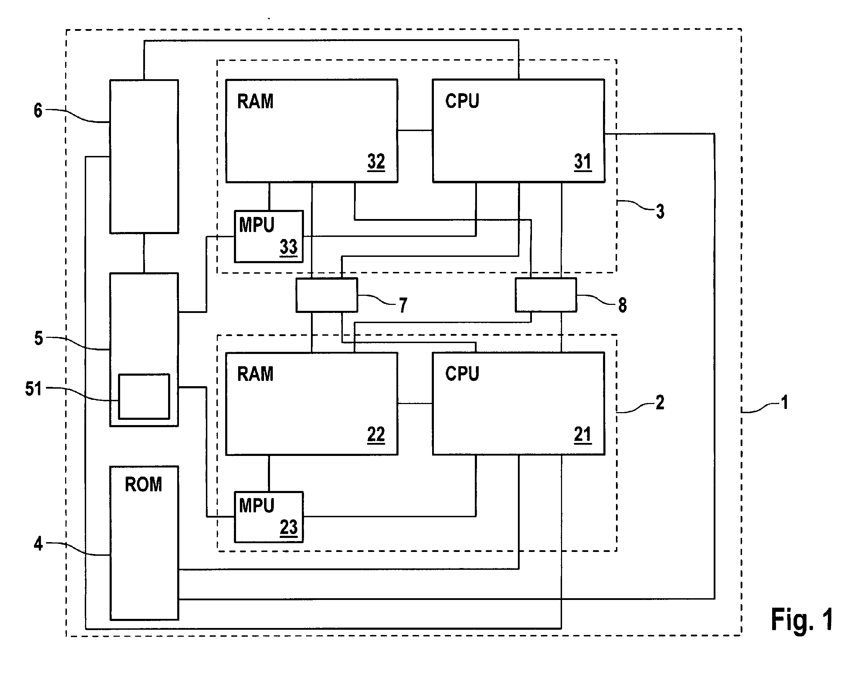

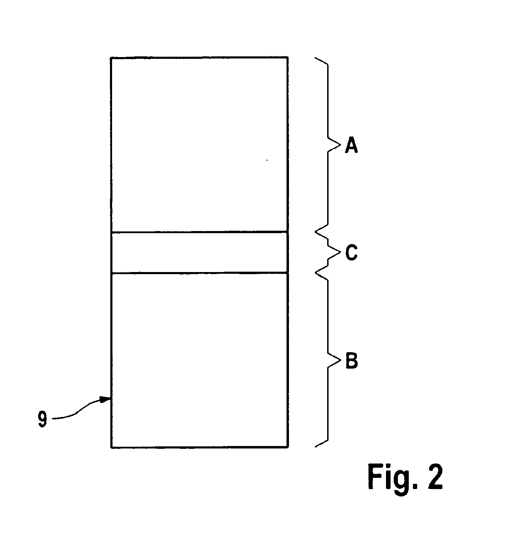

In Fig. 1 ist ein Ausführungsbeispiel eines integrierten Mikroprozessorsystems 1 veranschaulicht. Dieses umfasst zwei Mikroprozessorsystemmodule 2 und 3, welche jeweils einen Prozessorkern 21, 31, einen Schreibe-Lese-Speicher (RAM) 22, 32 und eine Speicherschutzeinheit (MPU) 23, 33 aufweisen. Außerdem umfasst integriertes Mikroprozessorsystem 1 noch einen gemeinsamen Festwertspeicher 4, ein Sicherheitsmodul 5 mit einer Watchdog-Einheit 51, ein Ein-Ausgabemodul 6 sowie zwei Prüfeinrichtungen 7, 8. Die Prozessorkerne 21, 31 und die Schreibe-Lese-Speicher 22, 32 sind jeweils mit Prüfeinrichtung 7 und Prüfeinrichtung 8 verbunden. Diese Prüfeinrichtungen 7,8 überprüfen die Ausgangsdaten und damit die Datenverarbeitung der Mikroprozessorsystemmodule 2, 3. Im Fall von inkonsistenten Ausgangsdaten der beiden Mikroprozessorsystemmodule 2, 3 veranlasst zumindest eine der Prüfeinrichtungen 7, 8 in Abhängigkeit des jeweiligen nicht übereinstimmenden Datums bzw. deren Anzahl, eine Abschaltung des Mikroprozessorsystems bzw. das Mikroprozessorsystem wird in einen sicheren Zustand versetzt. Prozessorkerne 21 und 31 sind jeweils mit dem Schreibe-Lese-Speicher 22 oder 32, der Speicherschutzeinheit 23 oder 33 und mit dem Ein-/Ausgabemodul 6 sowie dem gemeinsamen Festwertspeicher 4 verbunden. Gemeinsamer Festwertspeicher 4 umfasst so viel Speicherplatz, dass die gespeicherten Daten und zusätzliche Prüfdaten, welche aus einer Codierung der Daten zur Fehlererkennung und Fehlerkorrektur resultieren, in Festwertspeicher 4 abgespeichert sind. Gemeinsame Festwertspeicher 4 weist zusätzlich eine integrierte Decodereinheit auf, welche die codierten Daten decodiert und an der Schnittstelle bzw. dem Datenausgang des Festwertspeichers 4 decodiert bereitstellt und Fehler erkennt und, falls möglich in Abhängigkeit der Hamming-Distanz des verwendeten Codes, korrigiert und erkannte und korrigierte Fehler, welche beispielsweise durch externe Störsignale oder Materialveränderungen entstehen, bzw. eine Information über solch einen oder mehrere Fehler zusätzlich an der Schnittstelle des Festwertspeichers bereitstellt, wodurch die beiden Mikroprozessorsystemmodule 2 und 3 diese Informationen berücksichtigen und verarbeiten können. Die Speicherschutzeinheiten 23 und 33 sind jeweils mit einem Schreibe-Lese-Speicher 22, 23 und einem Prozessorkern 21, 31 verbunden und weisen zumindest dem jeweiligen Hauptprogramm und Überwachungsprogramm separate Adressbereiche A und B des jeweiligen Schreibe-Lese-Speichers 22 oder 23 zu, welche in Fig. 2 veranschaulicht sind, und erkennen unerwünschte Speicherzugriffe von Programmen auf separate Adressbereiche, welche anderen Programmen zugewiesen sind. Im Fall eines erkannten, unerwünschten Speicherzugriffs löst die jeweilige Speicherschutzeinheit 23, 33 eine Unterbrechungsroutine bzw. eine Interruptroutine aus, welche diesen Speicherzugriff zukünftig unterbindet und zumindest Teile des Mikroprozessorsystems in einen sicheren Zustand versetzt oder alternativ den unerwünschten Zugriff im vorhinein erkennt und diesen als tatsächlichen Speicherzugriff verhindert. Speicherschutzeinheiten 23 und 33 sind mit Sicherheitsmodul 5 verbunden, welches im Fall eines unerwünschten, von einer der Speicherschutzeinheiten 23, 33 erkannten Speicherzugriffs das Mikroprozessorsystem 1 abschaltet oder in einen sicheren Zustand bzw. Zustand eingeschränkter Funktionalität versetzt. Sicherheitsmodul 5 ist zusätzlich mit Ein-/Ausgabemodul 6 verbunden und steuert dieses 6 im Fall eines erkannten, unerlaubten Speicherzugriffs so an, dass das Ein-/Ausgabemodul oder ein definierter Kanal des Ein-/Ausgabemoduls abgeschaltet wird. Ein-/Ausgabemodul 6 ist außerdem mit Prozessorkernen 21 und 31 verbunden und kann vom jeweiligen Haupt- oder Überwachungsprogramm angesteuert werden. Dabei hat das jeweilige Überwachungsprogramm einen vorrangigen Zugriff bzw. kann den Zugriff des Hauptprogramms verhindern bzw. unwirksam machen.

Fig. 2 veranschaulicht beispielhaft die den verschiedenen Programmen zugeordneten Adressbereiche A und B eines der Schreibe-Lese-Speicher. Dabei ist Adressbereich A beispielgemäß dem Hauptprogramm zugeordnet und Adressbereich B dem Überwachungsprogramm. Ein unerwünschter Speicherzugriff wird dann erkannt, wenn das Hauptprogramm auf Adressbereich B oder das Überwachungsprogramm auf Adressbereich A zugreifen bzw. zugreifen wollen. Adressbereich C ist ein gemeinsamer Adressbereich des Haupt- und Überwachungsprogramms und dient dem notwendigen Datenaustausch bzw. zumindest dazu, dass Ausgangsdaten des Hauptprogramms dem jeweiligen Überwachungsprogramm zur Verfügung gestellt werden. Das Überwachungsprogramm führt beispielsweise Plausibilitätsprüfungen hinsichtlicht der Ansteuerung externer Systeme, wie Leistungstreiberstufen, in Abhängigkeit der Daten des Hauptprogramms durch. Im Fall, dass eine Ansteuerung nicht durchgeführt werden darf, verhindert das Überwachungsprogramm diese, indem es das Hauptprogramm überstimmt bzw. Vorrang vor diesem hat oder indem das Hauptprogramm zur Ansteuerung externer Systeme zusätzlich eine entsprechende Ansteuerung durch das Überwachungsprogramm benötigt, indem diese beiden Ausgangssignale beispielgemäß oder-verknüpft sind. Im Fall eines unerwünschten Speicherzugriffs, löst die jeweilig zugeordnete Speicherschutzeinheit eine Unterbrechungsroutine oder alternativ eine Ausnahmebehandlung (Exception) aus, die diesen unerwünschten Speicherzugriff verhindert oder eine nochmalige Ausführung unterbindet.

## Patentansprüche

1. Integriertes Mikroprozessorsystem (1) für sicherheitskritische Regelungen, umfassend wenigstens zwei Mikroprozessorsystemmodule (2,3), welche jeweils zumindest einen Prozessorkern (21,31), einen Schreibe-Lese-Speicher (22,32) und eine Speicherschutzeinheit (23,33) umfassen, und einen Festwertspeicher (4), der den Prozessorkernen (21,31) der Mikroprozessorsystemmodule (2,3) gemeinsam zugeordnet ist, wobei jedes der Mikroprozessorsystemmodule (2,3) ein Hauptprogramm und ein Überwachungsprogramm abarbeitet, welche insbesondere mehrere Unterprogramme umfassen, und die jeweilige Speicherschutzeinheit (23,33) dem Hauptprogramm und dem Überwachungsprogramm einen separaten Adressbereich (A,B) des Schreibe-Lese-Speichers (22,32) zuordnet, wobei die Speicherschutzeinheit (23,33) unerlaubte Speicherzugriffe eines der Programme auf den separaten Adressbereich (A,B) eines anderen Programms erkennt.

2. Mikroprozessorsystem nach Anspruch 1, **dadurch gekennzeichnet, dass** dieses ein erstes und ein zweites Mikroprozessorsystemmodul (2,3) umfasst, welche im Wesentlichen symmetrisch ausgebildet sind.

3. Mikroprozessorsystem nach Anspruch 1 oder 2, **dadurch gekennzeichnet, dass** dieses auf einem gemeinsamen Chip angeordnet ist.

4. Mikroprozessorsystem nach mindestens einem der Ansprüche 1 bis 3, **dadurch gekennzeichnet, dass** im Fall eines durch eine der Speicherschutzeinheiten (23,33) erkannten, unerlaubten Speicherzugriffs eine Unterbrechungsroutine abgearbeitet wird, welche das Haupt- oder Unterprogramm abbricht, das diesen unerlaubten Speicherzugriff durchführt, und dieses Haupt- oder Unterprogramm gegen einen nochmaligen Aufruf oder eine nochmalige Abarbeitung sperrt oder welche ein Abschalten des Mikroprozessorsystems (1) veranlasst oder welche zumindest Teile des Mikroprozessorsystems (1) in einen Notbetriebsmodus mit eingeschränkter Funktionalität versetzt.

5. Mikroprozessorsystem nach mindestens einem der Ansprüche 1 bis 3, **dadurch gekennzeichnet, dass** eine der Speicherschutzeinheiten (23,33) im Fall eines erkannten, unerlaubten Speicherzugriffs, diesen Speicherzugriff verhindert.

6. Mikroprozessorsystem nach mindestens einem der Ansprüche 1 bis 5, **dadurch gekennzeichnet, dass** dieses ein Sicherheitsmodul (5), das insbesondere als Hardwaremodul ausgebildet ist, aufweist, welches von den Speicherschutzeinheiten (23,33) angesteuert werden kann und wenigstens im Fall eines erkannten, unerlaubten Speicherzugriffs zumindest Teile des Mikroprozessorsystems (1) abschalten und/oder in einen Notbetriebsmodus mit eingeschränkter Funktionalität versetzen kann.

7. Mikroprozessorsystem nach mindestens einem der Ansprüche 1 bis 6, **dadurch gekennzeichnet, dass** dieses ein Ein-/Ausgabemodul (6) mit mehreren Kanälen aufweist, über welche die Hauptprogramme und die Überwachungsprogramme externe Systeme ansteuern, wobei die Überwachungsprogramme insbesondere einen vorrangigen Zugriff auf das Ein-/Ausgabemodul (6) im Vergleich zu den Hauptprogrammen haben.

8. Mikroprozessorsystem nach Anspruch 6 und 7, **dadurch gekennzeichnet, dass** das Sicherheitsmodul (5) eine Watchdog-Einheit (51) umfasst und das Ein-/Ausgabemodul (6) ansteuert, wobei im Fall eines erkannten, unerlaubten Speicherzugriffs, ein oder mehrere Kanäle des Ein-/Ausgabemoduls (6) durch das Sicherheitsmodul (5) abgeschaltet und/oder in einen sicheren Zusatz versetzt werden.

9. Mikroprozessorsystem nach mindestens einem der Ansprüche 1 bis 8, **dadurch gekennzeichnet, dass** die Speicherschutzeinheit (23,33) jedes Mikroprozessorsystemmoduls (2,3) dem jeweiligen Hauptprogramm und dem jeweiligen Überwachungsprogramm einen gemeinsamen Adressbereich (C) des jeweiligen Schreibe-Lese-Speichers (22,32) zum Datenaustausch zuordnet.

10. Mikroprozessorsystem nach mindestens einem der Ansprüche 1 bis 9, **dadurch gekennzeichnet, dass** dieses zwei Prüfeinrichtungen (7,8) zur Überwachung der Datenverarbeitung der beiden Mikroprozessorsystemmodule (2,3) aufweist, wobei diese Prüfeinrichtungen (7,8) jeweils mit den Prozessorkernen (21,31) und den Schreibe-Lese-Speichern (22,32) verbunden sind und deren Daten hinsichtlich fehlerhafter Unterschiede miteinander verglichen werden.

11. Verwendung mindestens eines integrierten Mikroprozessorsystems gemäß mindestens einem der Ansprüche 1 bis 10 in Kraftfahrzeugen, insbesondere in einem Kraftfahrzeugregelungssystem.

## Claims

1. Integrated microprocessor system (1) for safety-critical control systems, comprising at least two microprocessor system modules (2, 3) which each comprise at least one processor core (21, 31), a read/write memory (22, 32) and a memory protection unit (23, 33), and a read-only memory (4) which is jointly assigned to the processor cores (21, 31) of the microprocessor system modules (2, 3), wherein each of the microprocessor system modules (2, 3) executes a main program and a monitoring program which comprise, in particular, a plurality of subprograms, and the respective memory protection unit (23, 33) assigns a separate address area (A, B) of the read/write memory (22, 32) to the main program and to the monitoring program, wherein the memory protection unit (23, 33) detects unauthorized memory access operations by one of the programs for accessing the separate address area (A, B) of another program.

2. Microprocessor system according to Claim 1, **characterized in that** this microprocessor system comprises a first and a second microprocessor system module (2, 3) which are of substantially symmetrical design.

3. Microprocessor system according to Claim 1 or 2, **characterized in that** this microprocessor system is arranged on a common chip.

4. Microprocessor system according to at least one of Claims 1 to 3, **characterized in that**, when an unauthorized memory access operation is detected by one of the memory protection units (23, 33), an interrupt routine is executed which interrupts the main program or subprogram which is carrying out this unauthorized memory access, and locks this main program or subprogram against further retrieval or further processing, or which interrupt routine causes the microprocessor system (1) to be switched off or places at least parts of the microprocessor system (1) in an emergency operating mode with restricted functionality.

5. Microprocessor system according to at least one of Claims 1 to 3, **characterized in that**, when an unauthorized memory access operation is detected, one of the memory protection units (23, 33) prevents this memory access operation.

6. Microprocessor system according to at least one of Claims 1 to 5, **characterized in that** this microprocessor system has a security module (5) which is embodied, in particular, as a hardware module and which can be actuated by the memory protection units (23, 33) and, at least when an unauthorized memory access operation is detected, can switch off at least parts of the microprocessor system (1) and/or place them in an emergency operating mode with restricted functionality.

7. Microprocessor system according to at least one of Claims 1 to 6, **characterized in that** this microprocessor system has an input module/output module (6) with a plurality of channels via which the main programs and the monitoring programs actuate external systems, wherein the monitoring programs have, in particular, prioritized access to the input/output module (6) compared to the main programs.

8. Microprocessor system according to Claims 6 and 7, **characterized in that** the security module (5) comprises a watchdog unit (51) and actuates the input/output module (6), wherein, when an unauthorized memory access operation is detected, the security module (5) switches off one or more channels of the input/output module (6) and/or places them in a secure state.

9. Microprocessor system according to at least one of Claims 1 to 8, **characterized in that** the memory protection unit (23, 33) of each microprocessor system module (2, 3) assigns the respective main program and the respective monitoring program a common address area (C) of the respective read/write memory (22, 32) for exchanging data.

10. Microprocessor system according to at least one of Claims 1 to 9, **characterized in that** this microprocessor system has two test devices (7, 8) for monitoring the data processing of the two microprocessor system modules (2, 3), wherein these test devices (7, 8) are each connected to the processor cores (21, 31) and to the read/write memories (22, 32), and the data of these test devices (7, 8) are compared with one another in order to determine incorrect differences.

11. Use of at least one integrated microprocessor system according to at least one of Claims 1 to 10 in motor vehicles, in particular in a motor vehicle control system.

## Revendications

1. Système intégré (1) à microprocesseur pour régulations à sécurité critique, comprenant
au moins deux modules (2, 3) de système de microprocesseur, qui comprennent chacun au moins une âme de processeur (21, 31), une mémoire (22, 32) de lecture-écriture, une unité (23, 33) de protection de mémoire ainsi qu'une mémoire (4) à valeurs fixes associée conjointement aux âmes de processeur (21, 31) des modules (2, 3) du système à microprocesseur,
chacun des modules (2, 3) du système à microprocesseur exécutant un programme principal et un programme de surveillance qui comprennent en particulier plusieurs sous-programmes,
chaque unité (23, 33) de protection de mémoire associant au programme principal et au programme de surveillance une plage distincte (A, B) d'adresses de la mémoire (22, 32) de lecture-écriture,
l'unité (23, 33) de protection de mémoire reconnaissant des accès non autorisés d'un des programmes à la zone distincte (A, B) d'adresses d'un autre programme.

2. Système à microprocesseur selon la revendication 1, **caractérisé en ce qu'**il comporte un premier et un deuxième module (2, 3) de système à microprocesseur qui ont des configurations essentiellement symétriques.

3. Système à microprocesseur selon les revendications 1 ou 2, **caractérisé en ce qu'**il est disposé sur une puce commune.

4. Système à microprocesseur selon au moins l'une des revendications 1 à 3, **caractérisé en ce qu'**en cas d'accès non autorisé à la mémoire reconnu par l'une des unités (23, 33) de protection de mémoire, une routine d'interruption qui interrompt le programme principal ou le sous-programme qui exécute cet accès non autorisé à la mémoire est exécutée, empêche ce programme principal ou ce sous-programme d'appeler encore une fois, empêche un nouveau traitement, lance un débranchement du système (1) à microprocesseur ou place au moins des parties du système (1) à microprocesseur en mode de fonctionnement de secours dont les fonctionnalités sont limitées.

5. Système à microprocesseur selon au moins l'une des revendications 1 à 3, **caractérisé en ce que** l'une des unités (23, 33) de protection de mémoire empêche un accès à la mémoire au cas où l'accès à la mémoire est reconnu comme non autorisé.

6. Système à microprocesseur selon au moins l'une des revendications 1 à 5, **caractérisé en ce qu'**il présente un module (5) de sécurité configuré en particulier comme module matériel, qui peut être commandé par les unités (23, 33) de protection de mémoire et qui peut, au moins au cas où un accès non autorisé à la mémoire est détecté, débrancher au moins des parties du système (1) à microprocesseur et/ou le placer en un mode de fonctionnement de secours dont les fonctionnalités sont limitées.

7. Système à microprocesseur selon au moins l'une des revendications 1 à 6, **caractérisé en ce qu'**il présente un module d'entrée-sortie (6) qui présente plusieurs canaux par lesquels les programmes principaux et les programmes de surveillance commandent des systèmes externes, les programmes de surveillance ayant en particulier un accès au module d'entrée-sortie (6) prioritaire par rapport aux programmes principaux.

8. Système à microprocesseur selon les revendications 6 et 7, **caractérisé en ce que** le module de sécurité (5) comprend une unité de surveillance (51) et commande le module d'entrée-sortie (6), un ou plusieurs canaux du module d'entrée-sortie (6) étant débranchés par le module de sécurité (5) et/ou étant placés dans un état sûr au cas où un accès à la mémoire est reconnu comme non autorisé.

9. Système à microprocesseur selon au moins l'une des revendications 1 à 8, **caractérisé en ce que** l'unité (23, 33) de protection de mémoire de chaque module (2, 3) du système à microprocesseur associe à chaque programme principal et à chaque programme de surveillance une zone commune (C) d'adresses de la mémoire (22, 32) de lecture-écriture respective, en vue d'un échange de données.

10. Système à microprocesseur selon au moins l'une des revendications 1 à 9, **caractérisé en ce qu'**il présente deux dispositifs de vérification (7, 8) qui surveillent le traitement des données par les deux modules (2, 3) du système à microprocesseur, ces dispositifs de vérification (7, 8) étant chacun relié aux âmes (21, 31) de processeur et aux mémoires (22, 32) de lecture-écriture, leurs données étant comparées pour vérifier la présence éventuelle de différences entachées d'erreurs.

11. Utilisation d'au moins un système intégré à microprocesseur selon au moins l'une des revendications 1 à 10 dans des véhicules automobiles et en particulier dans un système de régulation d'un véhicule automobile.
